# EUROPEAN PATENT APPLICATION

(11) **EP 1 050 387 A1**
(43) Date of publication of application: **08.11.2000**
(21) Application number: 99830272.3
(22) Date of filing: 06.05.1999
(51) Int. Cl.: B27C 5/00, B27F 1/08, B27F 1/10, B23Q 1/54

(54) **A machine for machining the ends of parts for furniture and the like**

(71) Applicant: Pade S.a.s. di De Moliner Vinicio & C., 22060 Cabiate, Como (IT)
(72) Inventor: De Moliner, Vinicio, 22060 Cabiate - Como (IT)
(74) Representative: Perani, Aurelio

(57) **Abstract**

A machine (10) for machining ends of parts (116) for furniture and the like, which is unusually flexible and can operate with a very large working space whilst being structurally compact, comprises a head (30) with an electrical spindle (72) for rotating a tool (86), the electrical spindle (72) being positionable angularly about a first axis (B) and a second axis (A) perpendicular to one another and extending through the end (74) of the tool (86).

## Description

From a general point of view, the subject of the present invention is a machine for machining ends of parts for furniture such as, for example, bars and arms as well as parts of chairs, armchairs, built-in units and the like.

A particular aspect of the present invention relates to a work centre for machining ends of parts for furniture and the like.

According to another aspect, a subject of the present invention is a head for machining ends of parts for furniture and the like.

A machine of known type for machining ends of parts for furniture comprises, basically, a head provided with a rotary tool. The known head has a box-like structure comprising linkages connected to a drive device. The working movements of the tool can be performed along a predetermined path by means of the linkages. For example, the tool can be moved along a circular or elliptical path in order to form tenons from the ends of the parts. Clearly, at the moment, in order to form the seats or mortises for coupling with the above-mentioned tenons, as well as to perform other machining necessary to complete the furniture parts, a plurality of machines having cutting, drilling and polishing heads are required.

In the particular case of the above-mentioned known tenon-forming machines, the linkages which move the tool during the machining are arranged around the tool and render the head particularly bulky. This bulky head can be positioned by means of large guides which, because of the dimensions, are complex, bulky and imprecise. Moreover, because of the various devices fixed to the structure for supporting and moving the tool, such as the devices for gripping the part, the movements of the box-like structure of the head are very limited, defining a working space which, in current machines, is equally limited.

The problem of the present invention is to propose a machine, a work center, and a head for machining ends of parts for furniture and the like which has structural and functional characteristics such as to overcome the disadvantages mentioned above with reference to the prior art.

This problem is solved by means of a machine of the type specified above, characterized in that the head comprises an electrical spindle for rotating the tool, the spindle being positionable angularly about a first axis and a second axis perpendicular to one another and extending through the end of the tool.

Similarly, the technical problem is solved by the provision of a work center of the type specified above, characterized in that it comprises two of the above-mentioned machines arranged opposite one another.

The technical problem is also solved by the provision of a head for machining ends of parts for furniture and the like, characterized in that it is supported by means for controlled movement along at least three perpendicular axes, and in that it comprises an electrical spindle for rotating at least one tool, the spindle being positionable angularly about a first and a second axis perpendicular to one another and extending through the end of the tool.

For a better understanding of the invention, an embodiment thereof is described by way of non-limiting example below and is illustrated in the appended drawings, in which:
Figure 1 is a perspective view of a machine according to the invention,
Figure 2 is a perspective view of a detail of the head of the machine of Figure 1,
Figure 3 is a partially-sectioned, perspective view of the detail of Figure 2, taken on the arrow III,
Figure 4 is a perspective view of a device, facing a head, for gripping the part,
Figure 5 is a perspective view of a work center comprising two opposed machines,
Figure 6 is a partially-sectioned, perspective view of a second embodiment of a head for a machine according to the invention,
Figure 7 is a partially-sectioned, perspective view of the head of Figure 6 which has been rotated through 180° about the axis B.

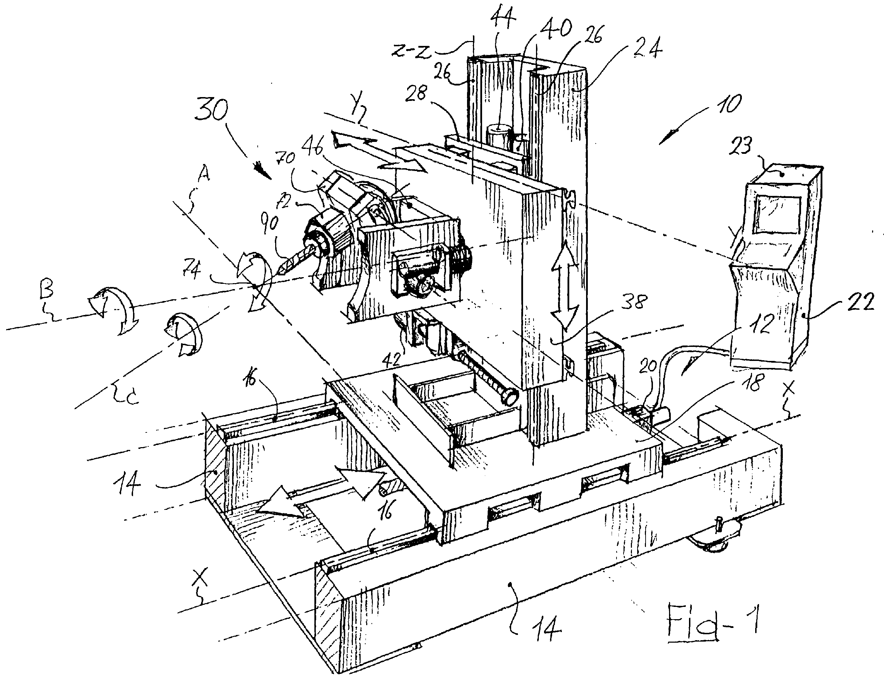

With reference to the above-mentioned Figures 1, 2 and 3, a machine for machining ends of parts for furniture is generally indicated 10.

The machine 10 comprises a base or framework 12 having longitudinal side members 14 supporting first parallel sliding guides 16 defining a first movement axis (X-X).

A carriage 18 is coupled with the first sliding guides 16 by means of sliding shoes. The carriage 18 is operatively connected to first drive means 20 supported by the base 12. For example, a motor of the type known as a brushless motor is keyed directly to a screw housed in an internally-threaded member with recirculating balls fixed to the lower side of the carriage 18. The drive means 20 are operatively connected to an actuating device 22 operated in controlled manner. For example, a position transducer is operatively connected to the drive means 20 with feedback to a numerical control device 23 operatively connected to the actuating device 22.

A pillar 24 extends vertically from the carriage 18 and has, on one side, second parallel sliding guides 26 defining a second movement axis (Z-Z). The pillar 24 has a C-shaped cross-section. The second guides 2 are fixed to the free ends of the arms of the C. The space formed by the arms of the C houses the service members of the machine 10 and the drive means of the upper axes described below.

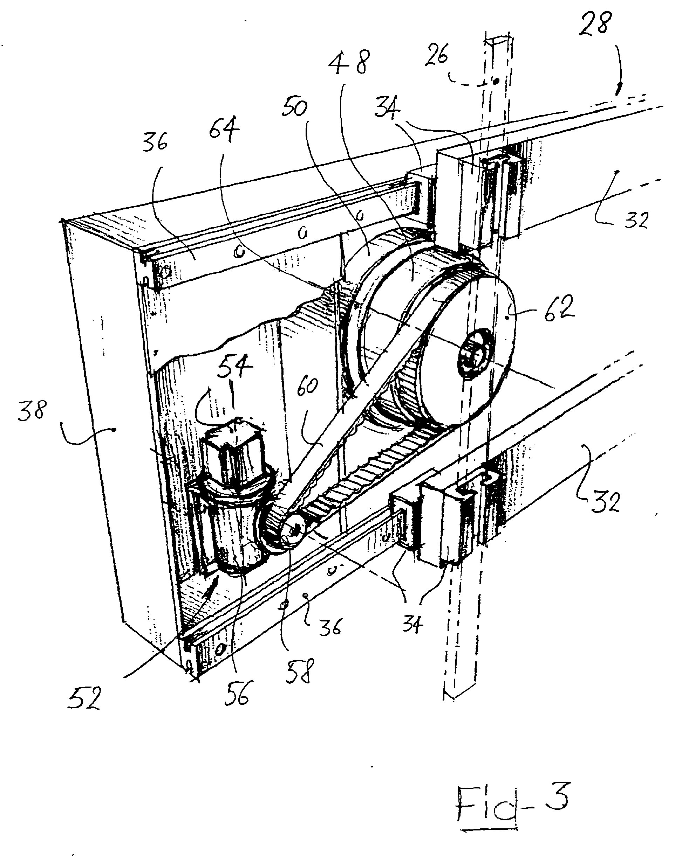

A set of crossed slides 28 is operatively connected to the second sliding guides 26. The set of crossed slides 28 supports a machining head, generally indicated 30. The crossed slides 28 comprise cross-members 32 having pairs of perpendicular sliding shoes 34 coupled, respectively, to the second sliding guides 26 and to third parallel sliding guides 36 fixed to the box-like or plate-shaped body 38 of the head 30 and defining a third movement axis (Y-Y) (Figure 3).

The set of crossed slides 28 is operatively connected to second and third drive means 40 and 42 supported by the pillar 24 and by the box-like body 38 of the head 30, respectively. The drive means 40, 42 are, for example, motors of the type known as brushless motors, keyed to screws housed in internally-threaded members with recirculating balls fixed to the inner side of the space in the C-shaped pillar and to the lower side of the box-like body 38 of the head 30, respectively. The drive means 40, 42 are operatively connected to the actuating device 22 which is operated in controlled manner. For example, position transducers 22 are operatively connected to the drive means 40, 42 with feedback to the numerical control device 23 operatively connected to the actuating device.

A weight-compensation device or counterweight 44 fixed to the pillar 24 is operatively connected to the crossed slides 28. For example, a pair of hydraulic or pneumatic cylinder-and-piston devices is fixed to the inner side of the space in the C-shaped pillar 24. The cylinder-and-piston device is operatively connected to the crossed slides 28 so as to counterbalance the effect of the weight of the crossed slides 28 and of the head 30 operatively connected thereto.

The head 30 comprises a fork 46 projecting from a shaft 48 housed in the box-like or plate-shaped body 38. The shaft 48 is supported by means of bearings 50 on the opposite wall of the box-like body 38 to the pillar 24 so as to rotate about a first positioning axis (B), for example, coinciding with the axis of symmetry of the fork 46. Drive means 52 are operatively connected to the shaft 48 so as to regulate the angular position of the fork 46 about the axis (B). For example, a motor 54 of the type known as a brushless motor is connected, by means of a transmission box 56 with externally and internally threaded members, fixed to an inner wall of the box-like body 38 of the head 30, to a pinion 58 which is connected by means of a toothed belt 60, to a pulley 62 keyed to the end of the shaft 48 housed in the box-like body 38 of the head 30 (Figure 3). The drive means 52 are operatively connected to the actuating device 22 with feedback to the numerical control device 23 by means of a position transducer. A brake unit 64 subservient to the shaft 48 locks the rotation of the fork 46 once the desired angular position about the axis (B) has been reached.

In the vicinity of the free ends of shoulders 66, the fork 46 has internal parallel grooves 68 for slidably housing cradle-shaped or sector-shaped guides 70. The cradle-shaped guides 70 slide in the grooves 68 of the shoulders 66 so as to swing about a second positioning axis (A) perpendicular to the positioning axis (B) of the fork 46. An electrical spindle 72 is connected to the cradle-shaped guides 70 in a manner such that its axis of rotation (C) is oriented towards the point of intersection of the first axis (B) and the second axis (A), which is defined as the center 74 of the positioning axes of the head 30. The cradle-shaped guides 70 are operatively connected to drive means 76 fixed to a shoulder 66 of the fork 46. For example, a self-braking motor 78 of the type known as a brushless motor is connected to a pinion 82 by means of a transmission box 80 with externally and internally threaded members, fixed to the outer wall of the shoulder 66, via a shaft housed in a bearing keyed in a through-hole provided in the shoulder 66. The pinion 82 is disposed inside the fork 46 and is meshed with a rack 84 formed on one side of a cradle-shaped guide 70. The drive means 76 are operatively connected to the actuating device 22 with feedback to the numerical control device 23 by means of a position transducer.

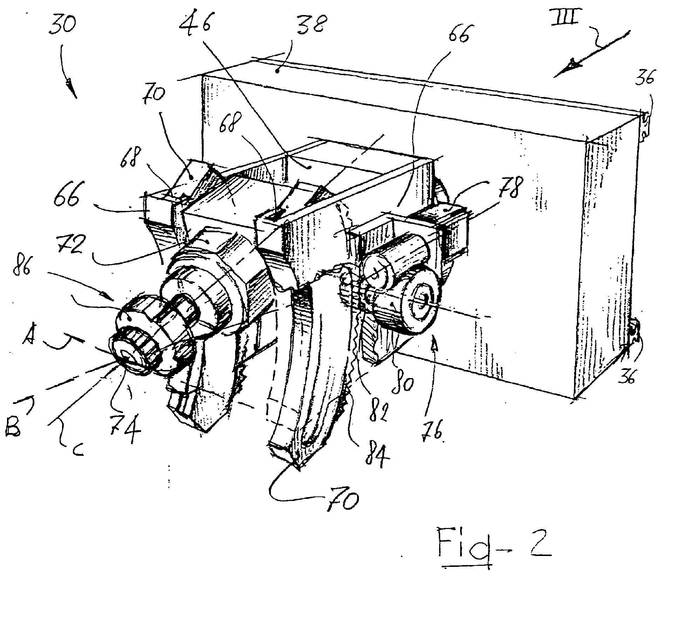

The electrical spindle 72 houses a tool 86, for example, a milling tool 88, for producing tenons or mortises, a drilling bit 90, or a polishing buffer. Particularly advantageously, the electrical spindle houses the tool 86 in a manner such that the tool tip or zero point or the end of the tool coincides with the center 74 of the positioning axes (B, A) of the head 30 (Figure 2).

Facing and subservient to the head 30 is a device, generally indicated 92, for gripping the part. The device 92 for gripping the part is movable away from and towards the structure for supporting and moving the head 30. For example, the device 92 for gripping the part is supported by a portal structure 94. The portal structure 94 is connected to the sliding guides 16 on the base 12 by means of sliding shoes. For example, drive means 96 fixed inside the base 12 are operatively connected to the lower side of the portal structure 94. In particular, the means for moving the portal structure 94 comprise a self-braking motor 98 of the type known as a brushless motor, fixed to the base 12 and operatively connected to a screw 100 housed in a internally-threaded member with recirculating balls fixed to the lower side of a base 102 of the portal structure 94. The motor 98 is operatively connected to the actuating device 22 with feedback to the numerical control device 23 by means of a position transducer.

A support plate 104 arranged transversely relative to the base 12 projects from the portal structure 94. The support plate 104 has a longitudinal slot 106 in which sliding guides 108 are housed.

A carriage 110 combined with a pincer 112 is operatively connected to the sliding guides 108. The carriage 110 is movable, under the effect of operating means, generally indicated 120, between a station 114 for the loading of the part 116 and a station 118 for the discharge of the part 116, passing through a work station. The carriage 110 is supported on the sliding guides 108 in a manner such that the pincer 112 is arranged partially above an upper surface 122 of the support plate 104 which can constitute the bearing and sliding surface for the part 116. In particular, the pincer 112 comprises a first, retractable abutment jaw 124, articulated to the carriage 110 and a second, gripping jaw 126 which is disposed opposite the first jaw and is selectively opened and closed away from and towards the abutment jaw 124 by means of a pneumatic device operable in a controlled manner. The first jaw 124 comprises an abutment or cap element made of synthetic material or of rubber and supported resiliently on the body of the first jaw 124. In the vicinity of the end of the carriage 110 facing the station 118 for the discharge of the part 116, there is a pawl ejector 128. In the work station, the support plate 104 has a seat which partially interrupts the support and guiding surface 122 for the part. The seat houses a retractable catch 127 which is ejected from and returned to the seat by a pneumatic device 129 operable in controlled manner.

Above the loading station 122, there is a vertical magazine 130 of known type. The magazine 130 comprises a device for releasing the parts 116, which is synchronized with the to-and-fro movement of the pincer 112.

In the work station, which is disposed approximately in the center of the support plate 104, a device for clamping the part being machined is disposed above the surface 122 for the support and sliding of the part 116 and is fixed to the upper cross-member 132 of the portal structure 94. For example, the clamping device is constituted by a small press or pressure element 134 comprising pneumatic cylinder-and-piston devices operable in controlled manner.

The operating means 120 for bringing abut the to-and-fro movement of the carriage 110 is described in greater detail below. The operating means 120 comprise a device with a connecting rod 136 and a crank 138 connected to a splined bar 140 arranged longitudinally relative to the base 12 and supported for rotating freely thereon in the manner of a mechanical drive take-off spread out along the base. In particular, the crank 138 is connected to a sleeve 142 with a splined profile, which is slidable freely along the splined bar 140 so as always to be meshed therewith, regardless of the position of the portal structure 94 relative to the base 12. The splined bar 140 is moved by means of an articulated quadrilateral device 144 connected to a geared motor unit 146 housed in the base 12. For example, the geared motor unit comprises an asynchronous motor connected to a reduction box on the output shaft of which there is a slotted crank engaged by a connecting rod acting on a second crank operatively coupled to the splined bar. The ratio of the lengths of the linkages of the articulated quadrilateral 144 is selected in an appropriate manner such that the splined bar 140 rotates at different speeds according to the angular arc travelled, in the manner described in greater detail below. The extreme angles of the rotation of the splined bar 140 correspond to the positions of the carriage 110 when it is positioned in the loading station 114 and in the discharge station 118 for the part 116. The asynchronous motor is controlled by an actuator, for example, a device commonly known as an inverter, so that, when the carriage 110 is disposed in the work station, it can be stopped for sufficient time for the machining operations on the end of the part 116 to be completed.

In one particular embodiment of the invention, the articulated quadrilateral is moved by means of a geared motor unit operatively connected to an actuator driven in controlled manner.

In a further embodiment of the invention, two devices 92 are provided for gripping the part 116 and are slidable on the same base 12 so as to be movable separately towards and away from the head 30 in order to support the part 116 in the vicinity of the ends thereof.

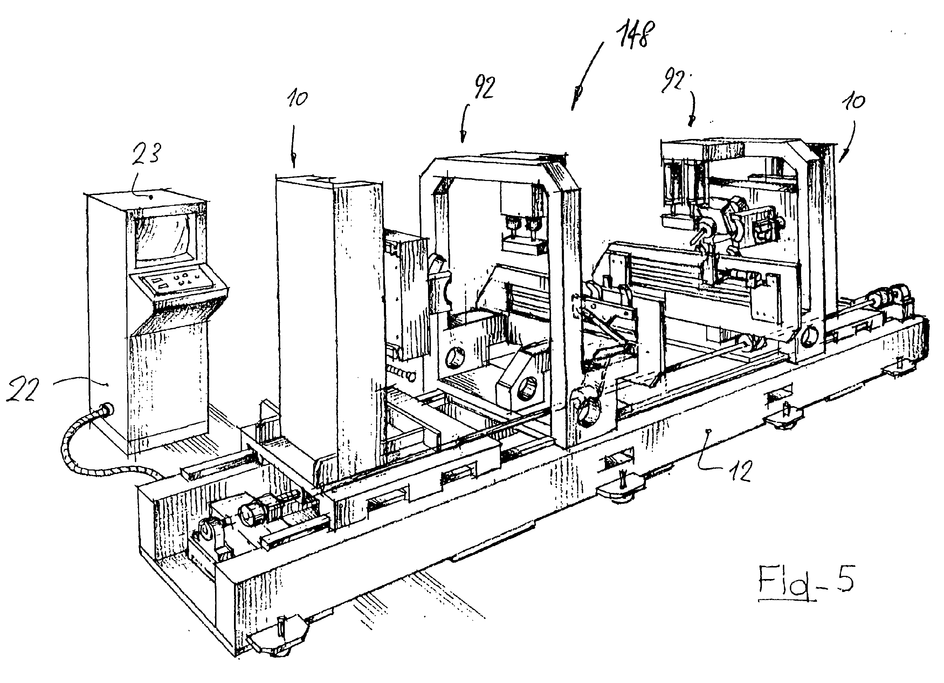

In an advantageous embodiment of the invention, two machines 10 are provided for machining the ends of parts 116, the machines being disposed opposite one another so as to act on the two ends of the part simultaneously, constituting a work center 148 (Figure 5). The two machines 10 are advantageously arranged for sliding on the same framework or base 12. Two devices 92 for gripping the part are interposed between the two machines 10.

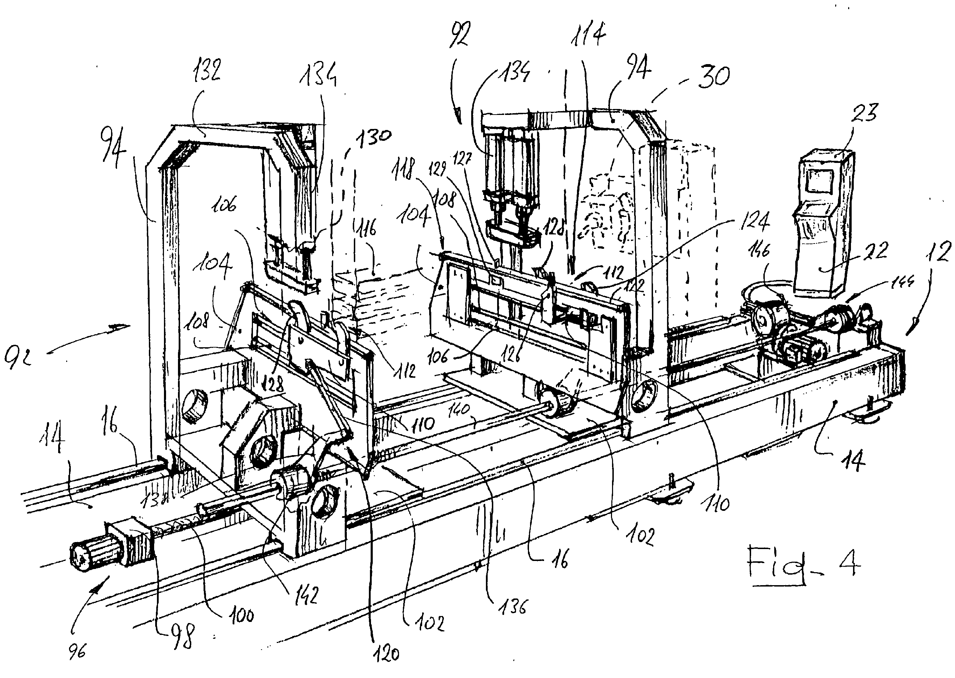

The operation of the machine 10, of the work center 148, and of the head 30 for machining the ends of parts 116 for furniture is described below with reference to Figures 1, 4 and 5.

The part 116 to be machined is released by the vertical magazine 113 and is placed on the support and sliding surface 122 between the jaws 124, 126 of the pincer 112.

The portal structure 94 supporting the device 92 for gripping the part 116 is arranged along the base 12 beforehand in a manner such as to align the support plate 104 with the end of the part 116 to be machined.

As a result of a command imparted by the numerical control device 23, the pincer 112 is closed onto the end of the part 116 and the carriage 110 is brought to the work station beneath the clamping device by a rotation of the splined bar 140. During the last stages of the movement of the pincer 112 towards the work station, the retractable catch 129 is extracted from the seat in the support plate 104 by a command imparted to the pneumatic device 129 by the control unit 23. After the carriage 110 has performed the stages of movement towards the work station at high speed, it slows down so as to place the part 116 against the retractable catch 127 without impact, by virtue of a suitable movement command imparted to the geared motor unit 146 by the inverter. The travel of the carriage then continues so as to preload the abutment element of the first, abutment jaw 124 and to unload the second, gripping jaw 126 to allow the pincer 112 to open after the part 116 has been clamped. When the part 116 has been clamped by lowering of the pressure element 134, the pincer 112 is opened and the carriage 110 is returned. The pawl ejector 128 passes beneath the part 116 clamped in the working position whilst the carriage 140 returns to the station 114 for the loading of parts 116.

Upon completion of the machining, whilst the carriage 110 brings a second part 116 to the working position, the ejector 128 disposed on the end of the carriage 110 urges the part 116 which has just been machined and has been released from the action of the pressure element 134, towards the discharge station 118.

When the part 116 is clamped in the working position, the machine 10 is moved along the axis (X-X) so as to bring the head 30 to the vicinity of the working area. By virtue of the fact that the tool 86 is supported on the end of a fork 46 which extends from the front of the box-like body 38 of the head 30, when the tool 86 reaches the working point or work area, the structure for supporting and moving the head 30 and, in particular, the carriage 18 and the pillar 24, are set back appreciably relative to the end of the part 116, ensuring ample room for the positioning movements of the tool 86.

The tool 86 is positioned by adjustment of the position of the electrical spindle 72 by the rotation (or yawing) of the fork 46 about the first positioning axis (B) and the swinging (or pitching) of the cradle-like guides 70 about the second positioning axis (A).

When the tool 86 is arranged on the predetermined axis, the crossed slides 28, the box-like body 38, and the carriage 18 can be moved in a manner such as to move the tool 86 along the desired path by controlled movement of the three perpendicular axes (X-X, Z-Z, Y-Y).

Both ends of the part 116 can be machined simultaneously by virtue of the provision of the two opposed machines 10 operating simultaneously in the work center 148.

It can be appreciated from the foregoing that one of the main advantages of the invention is that the tool supported by the electrical spindle is moved directly, by virtue of the provision of means for angular positioning about two perpendicular axes (B, A) which extend through the end of the tool. The yawing and pitching movements of the electrical spindle enable the axis (C) of the tool to be oriented extremely precisely relative to the end of the part to be machined.

A further considerable advantage is that the working movements are performed along linear axes (X-X, Y-Y, Z-Z) which, although they are of considerable dimensions, are very precise. Moreover, the fact that the electrical spindle is disposed at the end of a fork projecting over the work area or space enables the structure for supporting and moving the head (the carriage 18 and the pillar 24) and also the box-like body 38 of the head to be set back appreciably, allowing the tool a large degree of freedom of movement. The machine of the invention is consequently much more compact in comparison with known machines for a given working space and, conversely, a much larger working space is achieved by the machine of the invention than with known machines of given dimensions or overall size.

Further advantages are given below.

The end of the tool is not moved during the movement on the positioning axes (A) and (B), which renders the setting-up of the machine simpler as well as quicker and more accurate, and thus permits good productivity for both large and small production batches.

The kinematic chains for the movement on the axes (X-X, Z-Z and Y-Y) are of simple and precise construction (motors operated in controlled manner and connected directly to screws with recirculating balls, without the interposition of any reducers) permitting better working tolerances and extremely fast accelerations and speeds of the moving parts.

The provision of an electrical spindle permits the use of fast rates of revolution of the tool, permitting very accurate finishing of the part.

The structure for supporting and moving the head 30, comprising the carriage 18, the pillar 24 and the crossed slides 28, is very stiff and strong and, for this reason, and also by virtue of the fact that all of the axes (X-X, Z-Z, Y-Y) are controlled, its movements are very precise and quick.

By virtue of the structure of the means for supporting and moving the head and of the structure of the head itself, the machine of the invention is extremely flexible, enabling all of the machining operations to be performed on the ends of the furniture parts, with a considerable variety in the shapes which can be achieved, for example, routing operations and, in particular, the formation of tenons and mortises of any shape or form, and of grooves, as well as drilling and polishing operations can be performed.

Machining accuracy and flexibility are further increased by the provision of the part-gripping device which is independent of the structure for supporting and moving the head. In particular, the stresses induced by repeated accelerations along the linear axes (X-X, Z-Z, Y-Y) are not transmitted directly to the device for gripping the part.

The device for gripping the part can be arranged along the base in the most suitable position for gripping parts of complex spatial shapes.

The provision of a pincer-moving device comprising a rotary drive rather than a reciprocating device as is proposed by the prior art enables the part to be loaded and discharged at considerable speed.

Moreover, the provision of an articulated quadrilateral for moving the splined bar enables the pincers for positioning the part to be machined to be accelerated from the loading station to the working position and from the working position to the discharge station without interruption of the rotation of the motor.

The provision of a portal structure enables the means for clamping the part to be arranged in a manner such as not to obstruct the working head, increasing the working space.

Clearly, variations and/or additions may be applied to the embodiment described and illustrated.

First of all, for the movement of the arcuate guides 70, it is possible to provide a worm screw connected to a motor fixed rotatably to a shoulder 66 of the fork 46 and connected by means of tangential gearing to a rack with helical teeth formed on one side of a cradle-shaped guide 70. This prevents jamming of the drive means caused by the deposition of dirt or shavings on the rack.

Moreover, for the machining of parts having considerable transverse dimensions, the retractable catch constituting the stop abutment of the work station is housed in a seat provided in a bracket extending from the upper cross member 132 of the portal structure 94 towards the support plate 104.

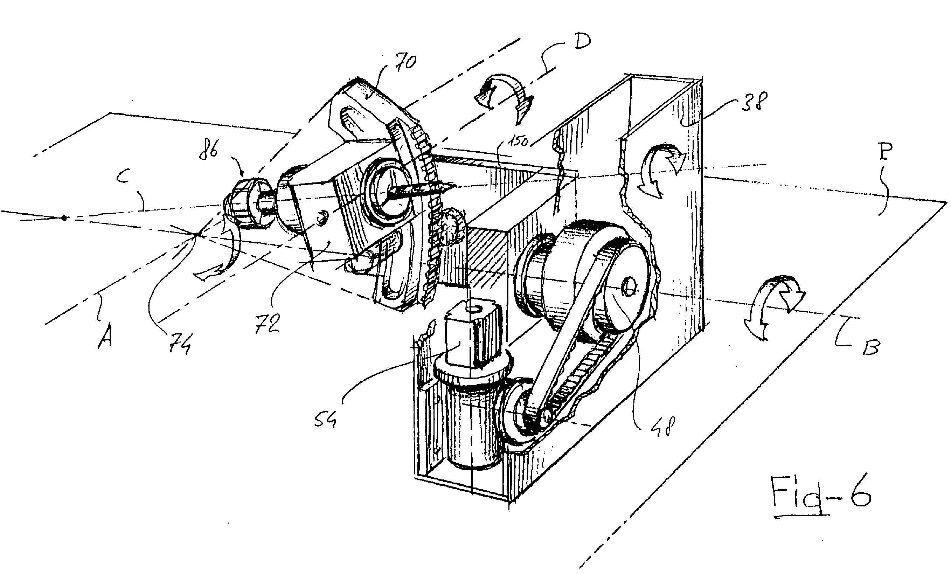

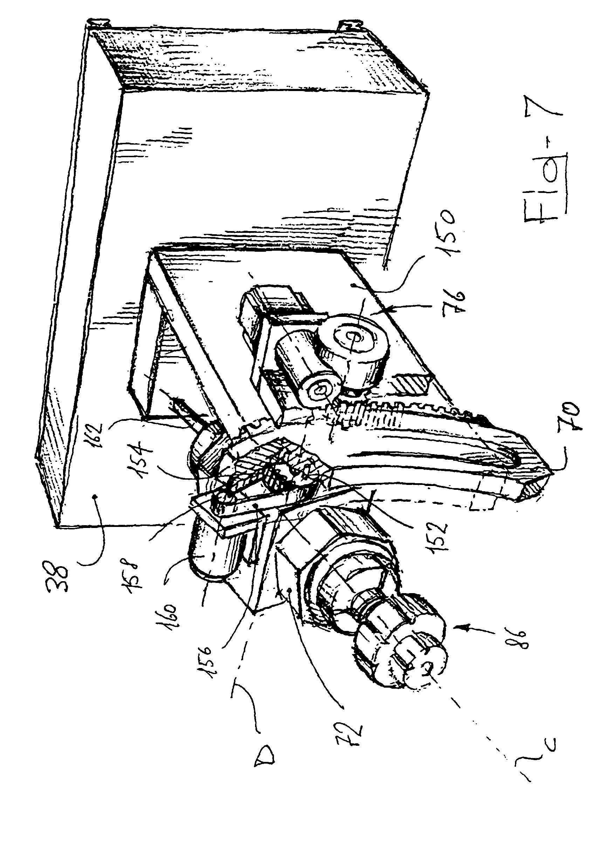

As can be seen from Figures 6 and 7, the tool can be positioned angularly about a further, third axis. The shaft housed in the box-like body 38 of the head 30 supports a bracket 150 in a manner such that it can be positioned angularly about the axis (B). The bracket 150 has, at its free end, a groove which houses, in the manner described above, a cradle-like guide 70 subservient to drive means 76. The electrical spindle 72 is connected to the cradle-shaped guide 70 by means of a planetary reduction gear 152 (Figure 7). The planetary reduction gear 152 enables the electrical spindle 72 to rotate about the axis (D) of the reduction gear 152. The planetary reduction gear 152 is driven, by means of a pulley 154 fixed to its casing, by a belt 156 wound around a pinion 158 fixed to the shaft of a self-braking motor 160 supported laterally by the spindle 72. The motor 160 is, for example, of the type known as a brushless motor and is operatively connected to the actuator device 23, with feedback to the numerical control device 22 by a position transducer. By virtue of the provision of a third positioning axis (D), it is possible to provide for the use of an electrical spindle 72 having opposed tools 86, 162. The second tool 162 can be brought to the position of use (in the center 74 of the positioning axes) by rotating the electrical spindle 72 through 180° about the axis (D) of the planetary reduction gear 152. It is thus possible to perform more than one machining operation with a single positioning of the part, achieving very precise machining, and greater flexibility and speed of production.

In a further embodiment of the invention, the motor 54 of the axis (B) of the shaft 48 for supporting the fork 46 or the bracket 150, the motor 78 of the axis (A) of swinging of the cradle-shaped guides 70, and the motor 160 of the axis (D) of transverse pivoting of the electrical spindle 72 are controlled continuously by the numerical control device 23 so that they can be used as working axes for forming ends of parts with complex spatial surfaces.

## Claims

1. A machine (10) for machining ends of parts (116) for furniture and the like, with a head (30) provided with a rotary tool (86), characterized in that the head (30) comprises an electrical spindle (72) for rotating the tool (86), the spindle being positionable angularly about a first axis (B) and a second axis (A) perpendicular to one another and extending through the end (74) of the tool (86).

2. A machine (10) according to Claim 1, characterized in that the electrical spindle (72) is supported by controlled movement means.

3. A machine (10) according to Claim 1 or Claim 2, characterized in that the head (30) comprises a fork (46) projecting from a shaft (48) housed in a box-like body (38) of the head (30) in a manner such as to be positionable angularly about the first axis (B).

4. A machine (10) according to Claim 3, characterized in that, in the box-like body (38) of the head (30), there is a geared motor unit (52) connected by means of a belt (60) to a pulley (62) keyed to the shaft (48) for rotating the fork (46).

5. A machine (10) according to Claim 3, characterized in that the fork (46) has cradle-shaped guides (70) for positioning the electrical spindle (72) angularly about the second axis (A).

6. A machine (10) according to Claim 5, characterized in that the fork (46) supports a geared motor unit (76) which has a pinion (82) meshed with a rack (84) provided in one of the cradle-shaped guides (70).

7. A machine (10) according to Claim 1, characterized in that the electrical spindle (72) can be positioned angularly about a third axis (D) perpendicular to the axis (C) of the electrical spindle (72).

8. A machine (10) according to Claim 7, characterized in that the electrical spindle (72) is connected to the head (30) by means of a planetary reduction gear (152) driven by a geared motor unit.

9. A machine (10) according to Claim 7 or Claim 8, characterized in that the head (30) has an electrical spindle (72) having seats for rotary tools at opposite ends.

10. A machine (10) according to any one of the preceding claims characterized in that means for performing the machining movements of the part (116) are interposed between a framework (12) and the head (30).

11. A machine (10) according to Claim 10, characterized in that the head (30) is supported by means for controlled movement along at least three perpendicular axes (X-X, Z-Z, Y-Y).

12. A machine (10) according to Claim 11, characterized in that the controlled movement means are supported by the framework (12).

13. A machine (10) according to Claim 12, characterized in that the framework (12) supports a carriage (18) slidable along longitudinal guides (16) defining the first axis (X-X) of the three perpendicular axes of controlled movement of the head (30).

14. A machine (10) according to Claim 13, characterized in that a pillar (24) extends upwardly from the carriage (18) and has vertical guides (16) defining the second axis (Z-Z) of the three perpendicular axes of controlled movement of the head (30).

15. A machine (10) according to Claim 14, characterized in that a set of crossed slides (28) supporting the head (30) is movable along the pillar (24).

16. A machine (10) according to any one of the preceding claims, characterized in that it comprises a device (92) for gripping the part (116) , the device (92) facing the head (30) and being movable away from and towards the structure for supporting and moving the head (30).

17. A machine (10) according to Claim 16, characterized in that the device (92) for gripping the part (116) comprises a carriage (110) having a pincer (112), and in that the carriage (110) is movable, under the effect of operating means (120), in a slot (106) formed in a support plate (104), between a station (114) for the loading of the part and a station (118) for the discharge of the part, passing through a work station.

18. A machine (10) according to Claim 17, characterized in that a retractable, abutment jaw (124) is articulated to the carriage (110) and is disposed opposite a gripping jaw (126) which is opened and closed selectively away from and towards the abutment jaw (124), constituting the pincer (112).

19. A machine (10) according to Claim 17, characterized in that, in the vicinity of the end of the carriage (110) facing the station (118) for the discharge of the part, there is a pawl ejector (128).

20. A machine (10) according to Claim 17, characterized in that the operating means (120) comprise a device with a connecting rod (136) and a crank (138) connected to a splined bar (140).

21. A machine (10) according to Claim 20, characterized in that it comprises an articulated quadrilateral device (144) for moving the splined bar (140).

22. A machine (10) according to Claim 16, characterized in that, above the loading station (114) of the carriage (110) provided with the pincer (112), there is a vertical magazine (130) for the parts (116) to be machined.

23. A machine (10) according to any one of Claims 16 to 22, characterized in that the device (92) for gripping the part (116) is supported by a portal structure (94).

24. A machine (10) according to Claim 23, characterized in that the portal structure (94) has, on a cross-member (132) disposed above the device (92) for gripping the part (116), a device for clamping the part (116) being machined.

25. A machine (10) according to Claim 24, characterized in that a pressure element (134) is provided above the support plate (104).

26. A machine (10) according to Claim 17, characterized in that a retractable catch (127) is provided in the support plate (104), in the region of the work station.

27. A machine (10) according to Claim 11, characterized in that the controlled movement means comprise motors (20, 40, 42) operated in controlled manner and connected to screws with recirculating balls for moving the portions of the structure which support and move the head (30).

28. A machine (10) having two devices (92) for gripping the part (116) according to Claim 16, the devices (92) being movable separately towards and away from the head (30) in order to support the part (116) at its ends.

29. A work center (248) for machining the ends of parts (116) for furniture and the like, characterized in that it comprises two machines (10) as claimed in any one of the preceding claims, arranged opposite one another.

30. A work center (148) according to Claim 27, characterized in that the two opposed machines (10) act on the two ends of the part (116) simultaneously.

31. A work center (148) according to Claim 27, characterized in that the two opposed machines (10) are supported by the same framework (12).

32. A head (30) for machining ends of parts (116) for furniture and the like, characterized in that it is supported by means for controlled movement along at least three perpendicular axes (X-X, Z-Z, Y-Y), and in that it comprises an electrical spindle (72) for rotating at least one tool (86), the spindle (72) being positionable angularly about a first axis (B) and a second axis (A) perpendicular to one another and extending through the end (74) of the tool (86).
